# EUROPEAN PATENT APPLICATION

(11) **EP 0 941 655 A1**
(43) Date of publication of application: **15.09.1999**
(21) Application number: 99200689.0
(22) Date of filing: 09.03.1999
(51) Int. Cl.: A01K 11/00

(54) **Device provided with biometric information for the identification of an animal**

(30) Priority: 09.03.1998 NL 1008540
(71) Applicant: N.V. Nederlandsche Apparatenfabriek NEDAP, NL-7141 DE Groenlo (NL)
(72) Inventor: Postma, Ebele Marten, 7244 NN Barchem (NL); Kuip, Anton, 7141 DG Groenlo (NL)
(74) Representative: Ottevangers, Sietse Ulbe

(57) **Abstract**

The electronic earmark for the identification of animals comprises a housing and a transponder received in the housing. In the transponder, information of the animal is stored. The information can be read out using an electromagnetic field. According to the invention, the information comprises biometric information of the animal.

## Description

The invention relates to an electronic earmark arranged to be fastened to an ear of an animal for the identification of the animal, the electronic earmark comprising a housing and a transponder received in the housing, in which information of the animal is stored, while the stored information can be read out using an electromagnetic interrogation field.

The invention also relates to a method for making an animal identifiable, wherein an electronic earmark is fastened to an ear of the animal, which electronic earmark comprises a housing and a transponder received in the housing, and the electronic earmark is provided with information of the animal.

The invention further relates to a method of verifying whether an animal is provided with a correct electronic earmark as mentioned hereinabove.

The invention furthermore relates to a system comprising at least one electronic earmark as mentioned hereinabove.

Such an electronic earmark is known per se and is widely used for identifying, for instance, cows, goats, sheep and other livestock. The information stored in the transponder typically consists of life numbers which are added to the animal. In that case, the animal retains the life number in question during its entire life. This life number is used to register the course of the animal's life. This enables, for instance, keeping a record of where the animal has been in the past. Also other information about the animal, such as the disease history, can be registered in relation to the life number. This information can, for instance, be monitored in a central database.

It is important that the identification of the animal using the electronic earmark referred to is reliable. This entails precluding the possibility that the electronic earmark is accidentally or intentionally added to a wrong animal, without this becoming manifest. With the known electronic earmark, this certainty cannot be provided. In other words, the earmark is susceptible to fraud, since it is not difficult to remove the earmark from an animal and to provide the animal with another earmark. The removed earmark may then be possibly used with another animal. In that case, a situation arises where the true identity of at least one animal is lost. It will be clear that such situations must be precluded, particularly if it is realized that, as a result, wrong conclusions may be drawn in respect of the spread of diseases, such as BSE, that may occur among the animals.

The object of the invention is therefore to provide an electronic earmark which entirely obviates the disadvantages outlined above. Accordingly, the electronic earmark according to the invention is characterized in that the information stored in the transponder comprises biometric information of the animal.

To check whether the device does indeed belong to the animal, the biometric information can be read out from the transponder using the electromagnetic interrogation field. This biometric information can be compared with biometric information which has been and/or is determined directly at the animal. If this biometric information is in agreement, it can be established that the electronic earmark indeed belongs to the animal. The earmark may be provided with an identification code which is visibly provided on the housing. It is then possible, therefore, to establish the true identity of the animal directly. It is then also known that the identification code is the correct code, since the biometric information of the transponder agrees with the biometric information of the animal.

Of course, it is also possible that the identification code is stored in the transponder. In that case, the identification code can be read out using the interrogation field.

The biometric information referred to can comprise, for instance, information about an iris, a retina, the DNA, the teeth, a (heat) radiation pattern, a noseprint and/or other measurable characteristic properties of the animal.

According to the invention, the method for making-an animal identifiable is characterized in that biometric information of the animal is stored in the transponder, so that the biometric information can subsequently be read out from the transponder to check if the animal is provided with the correct device belonging to the animal.

The method of verifying whether an animal is provided with a correct electronic earmark is characterized in that the biometric information is read out at the transponder and is subsequently compared with biometric information which has been and/or is determined directly at the animal.

If the identification code of the animal is also stored in the transponder, this code is preferably read out as well, so that in addition to a verification an identification is carried out as well.

The system according to the invention referred to further comprises a sensor for directly determining biometric information at the animal, a transmitter and receiver unit for reading out, using an electromagnetic interrogation field, the biometric information stored in the transponder, and a computer for comparing the biometric information obtained using the sensor with the biometric information read out at the transponder, and for generating a comparison signal which represents the outcome of the comparison referred to.

In this way, therefore, it is verified in an automatic manner whether the electronic earmark has indeed been added to the correct animal. In particular, the means referred to are also arranged to read out the identification code from the transponder. Therefore, the system also makes it possible to carry out the identification of the animal in a fully automatic manner.

The invention also relates to a system which further comprises a sensor for directly determining biometric information at the animal, a transmitter and receiver unit for generating an electromagnetic interrogation field, and a computer which is connected with the sensor and the transmitter and receiver unit, while, in use, for making the animal identifiable, using the sensor, biometric information is determined directly at the animal, and is supplied to the computer, the computer controlling the transmitter and receiver unit such that the directly determined biometric information is written in the transponder using the interrogation field generated by the transmitter and receiver unit.

The invention will now be further elucidated with reference to the drawing. In the drawing:

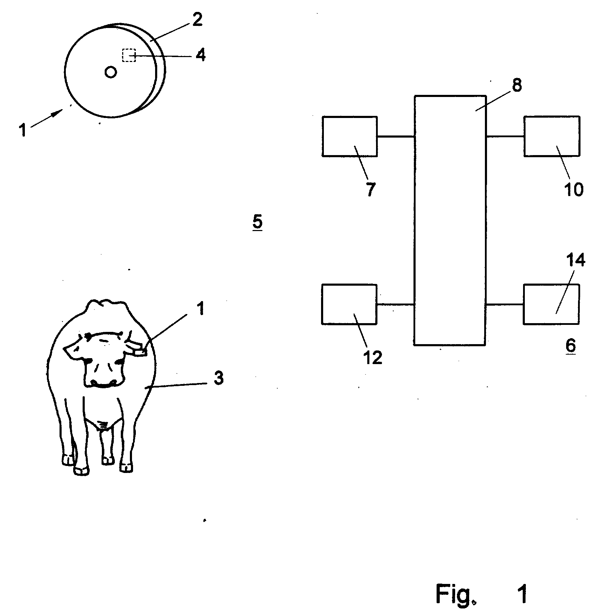

Fig. 1 shows a system according to the invention which comprises an electronic earmark according to the invention.

In Fig. 1, reference numeral 1 designates an electronic earmark according to the invention. The electronic earmark 1 comprises a housing 2, known per se, and a transponder 4, received in the housing 2. The transponder 4 is of a generally known type and can be designed both as an active and as a passive transponder.

In the transponder 4, information is stored. This information can be read out using an electromagnetic interrogation field.

In use, the electronic earmark 1 is added to an animal 3 by fastening it to the ear of the animal. Such a situation is also shown in Fig. 1.

According to an aspect of the invention, the information stored in the electronic earmark 1 in any case comprises biometric information of the animal. This biometric information can comprise information about, for instance, an iris, a retina, the DNA, the teeth, a (heat) radiation pattern as, for instance, an infrared image of the head, a noseprint and/or other measurable characteristic properties of the animal.

The invention, therefore, is not limited to the examples of biometric information given hereinbefore.

The electronic earmark 1 can be used as follows. To verify whether the animal is provided with the correct electronic earmark 1, the biometric information is read out at the transponder. Then this biometric information is compared with biometric information which has been and/or is determined directly at the animal. If the biometric information coming from the transponder agrees with the biometric information determined directly at the animal, this means that the animal is provided with the correct electronic earmark. If the biometric information is not in agreement, this means that the animal is provided with an incorrect electronic earmark and optionally a further inquiry can be made. An identification code of the animal may be visibly provided at the earmark 1. This means that after the verification referred to, the identity of the animal can be established with certainty. It is also possible that the information stored in the transponder includes an identification code, such as a life number of the animal. In that case, for determining the identity of the animal, the identification code can also be read out at the transponder. In addition to a verification, an identification is then carried out as well.

According to the invention, before the above-mentioned method can be carried out, other steps must be taken first. Accordingly, the invention relates to a method for making an animal identifiable, wherein the animal is provided with the above-mentioned electronic earmark. Further, biometric information of the animal is stored in the transponder of the electronic earmark, so that the biometric information can subsequently be read out from the transponder to check if the animal is provided with the correct electronic earmark belonging to the animal. In particular, the electronic earmark is provided with the biometric information before the electronic earmark is supplied to the animal. It is also possible, however, that the electronic earmark is provided with the biometric information after the electronic earmark is supplied to the animal. The biometric information can be determined directly at the animal, using a sensor, and subsequently be stored in the transponder in a manner known per se. After this, as discussed, it can be verified whether the animal is provided with the correct electronic earmark and, if desired, the identity of the animal can be established as well.

A system for verifying whether an animal is provided with a correct electronic earmark, for determining the identity of the animal and for making an animal identifiable, will be discussed hereinafter with reference to Fig. 1.

The system 5 according to Fig. 1 for verifying whether animals are provided with a correct transponder comprises, in this example, a station 6 comprising a transmitter and receiver unit 7 for generating an electromagnetic interrogation field by means of which the transponder can be read out. In use, therefore, using the transmitter and receiver unit, the biometric information is read out from the transponder 4. This biometric information is received by the transmitter and receiver unit 7 and, in this example, supplied to a computer 8 of the station 6. The obtained biometric information can, for instance, be displayed on a display 10. The biometric information is also determined directly at the animal 3. By comparing the biometric information determined directly at the animal 3 with the biometric information read out from the transponder 4, it can be verified if the animal is provided with the correct device. If the compared information is in agreement, the animal 3 is provided with the correct electronic earmark. If the compared information does not agree, the animal, apparently, is not provided with the correct transponder. The direct determination of the biometric information at the animal can be carried out in different ways, depending on the type of biometric information. When DNA is involved, a piece of skin of the animal can be removed. Subsequently, in a manner known per se, the DNA structure can be determined. Thereafter, this structure can be compared with the biometric information displayed on a display 10 of the station 6.

Other biometric information, such as information about the teeth of the animal, can be determined, for instance, with the naked eye. Accordingly, one can establish directly whether the information about the teeth which is displayed on the display 10 corresponds with the teeth of the animal. Similarly, this applies to the biometric information about a noseprint. A noseprint can be determined in a manner known per se. The noseprint can be obtained, for instance, in a manner comparable to that in which a fingerprint is obtained. Here, too, it is possible to establish directly by eye whether the noseprint corresponds to the image on the display 10. Optionally, the biometric information about the iris can be recorded with a video camera and be displayed on a video display. A trained user can then check whether the biometric information obtained directly in this way corresponds with the biometric information displayed on the display 10.

It is also possible, however, to fully automate the system. In this example, the station 6 to that end comprises a sensor 12 which is also connected to the computer 8. The sensor 12 can consist, for instance, of a video camera or a DNA-analyzer. In any case, the sensor 12 is so arranged that it can determine the biometric information in question directly at the animal. This biometric information is supplied to the computer 8. The computer 8 compares the directly obtained biometric information with the biometric information read out from the transponder 4 using the transmitter and receiver unit 7. The computer then generates a signal which represents the outcome of the comparison. Thus, the signal can indicate, for instance, that the biometric information (within predetermined narrow limits) is the same, or that the biometric information is different. In the latter case, this means that the electronic earmark 1 has not been added to the correct animal, in other words, the electronic earmark 1 and the animal do not belong to each other. A further inquiry may then be made into the true identity of the animal. When the biometric information corresponds, this means that the correct electronic earmark with the correct identification code has been added to the animal.

As stated, the identification code itself can be, for instance visibly, provided on the electronic earmark 1, so that it can be read directly. If the identification code is stored in the transponder, this code can likewise be read out using the transmitter and receiver unit 7 and optionally be displayed on the display 10. Accordingly, the system is suited to determine the identity of the animal. Also, it may then be indicated on the display whether the biometric information corresponds. At that moment, it is known immediately whether the correct identification code is displayed. Also, the computer may be arranged such that the identification code is displayed only when the biometric information of the transponder and the biometric information determined directly from the animal correspond.

Such variants are each understood to fall within the scope of the invention.

According to a particular embodiment of the electronic earmark, the transponder is further arranged to store new information in the transponder using the electromagnetic interrogation field, which new information can likewise be read out from the transponder again using the electromagnetic interrogation field.

When the electronic earmark is added to the animal, the biometric information, as stated, can be determined directly at the animal in a manner known per se. Thereafter, this biometric information is stored in the transponder using the electromagnetic interrogation field to be read out again at a later stage when a check is necessary. The time at which the biometric information is stored in the transponder may vary. It may be done before the electronic earmark is added to the animal, but it may also be done after the electronic earmark has been added to the animal. Subsequently, for instance the noseprint of the animal can be determined and be stored in the transponder. In this example, the station 5 is also arranged to write new information in the transponder using the transmitter and receiver unit 7. This can be utilized for making the animal identifiable when the animal has not been provided yet with an electronic earmark including a transponder in which biometric information of the animal is stored. To that end, using the sensor 12, biometric information is determined directly at the animal in question. This biometric information is passed on to the computer 8. The computer 8 then controls the transmitter and receiver unit 7, such that the transmitter and receiver unit 6 generates an electromagnetic interrogation field by means of which the biometric information determined directly is stored in the transponder 4 of the electronic earmark 1. The electronic earmark 1 may at this moment have been added to the animal already, or be subsequently added to the animal. Eventually, the animal is provided with the electronic earmark 1, and biometric information of the animal is stored in the transponder 4 of the electronic earmark 1. Also, the computer 8 can control the transmitter and receiver unit such that an identification code of the animal is stored in the transponder. This identification code can be inputted via an inputting unit 14 which is coupled with the computer 8 at the station 6. In that case, therefore, the station 6 is suited to store, in combination, biometric information and an identification code of the animal in the transponder 4 of the electronic earmark 1. For writing new information (such as new biometric information and/or a new identification code) in the transponder 4, authorisation codes and authentication codes can be utilized in a manner known per se. Without these codes, it is not possible to store new information in the transponder.

In this example, the station 6 is arranged to read out biometric information and optionally an identification code from the transponder 4, as well as to store biometric information and optionally an identification code in the transponder 4. However, the invention also relates to a station 6 which is arranged solely to store in the transponder 4 of the electronic earmark 1 biometric information which has been obtained directly at an animal using the sensor 12, optionally together with an identification code of the animal. Such a station, therefore, is used only for making the animal identifiable.

In this example, the station 5 comprises a transmitter and receiver unit 7. It is also conceivable, however, that information is stored in the transponder 4 and/or is read out from the transponder 4 using other read/write means. The transponder can be provided with a ROM memory, an EPROM memory, a write-once memory, etc. Writing in the memory can be controlled through an authorisation code or authentication code.

It is also possible that the computer 8 is coupled with a central database in which further information of the animal is stored. The system may comprise a large number of stations 6 each comprising a transmitter and receiver unit 7, a computer 8, a display 10 and a sensor 12 as described hereinbefore. Each of these stations may be coupled to the central database. This allows the central database to also keep a record of the station at which, and the moment at which, the identification code of the animal in question was determined. In this way, a record can be kept of where the animal has been in the past.

Such variants are each understood to fall within the scope of the invention.

## Claims

1. An electronic earmark arranged to be fastened to an ear of an animal for the identification of the animal, the electronic earmark comprising a housing and a transponder received in the housing, in which information of the animal is stored, while the stored information can be read out using an electromagnetic interrogation field, characterized in that the information stored in the transponder comprises biometric information of the animal.

2. An electronic earmark according to claim 1, characterized in that the biometric information comprises information about, for instance, an iris, a retina, the DNA, the teeth, a (heat) radiation pattern, a noseprint and/or other measurable characteristic properties of the animal.

3. An electronic earmark according to claim 1 or 2, characterized in that the transponder is designed as an active or passive transponder.

4. An electronic earmark according to claim 1, 2 or 3, characterized in that the transponder is also arranged to store new information in the transponder using the electromagnetic interrogation field, which new information can also be read out from the transponder again using the electromagnetic interrogation field.

5. An electronic earmark according to any one of the preceding claims, characterized in that the information stored in the transponder also comprises an identification code of the animal.

6. An electronic earmark according to any one of the preceding claims, characterized in that the electronic earmark is further provided with at least one identification code of the animal, which is visibly provided at the electronic earmark.

7. A method for making an animal identifiable, in which an electronic earmark is fastened to an ear of the animal, which electronic earmark comprises a housing and a transponder received in the housing, and the electronic earmark is provided with information of the animal, characterized in that biometric information of the animal is stored in the transponder, so that the biometric information can subsequently be read out from the transponder to check whether the animal is provided with the correct electronic earmark belonging to the animal.

8. A method according to claim 7, characterized in that the biometric information comprises information about, for instance, an iris, a retina, the DNA, the teeth, a (heat) radiation pattern, a noseprint and/or other measurable characteristic properties of the animal.

9. A method according to claim 7 or 8, characterized in that the electronic earmark is provided with the biometric information before the device is added to the animal.

10. A method according to claim 7 or 8, characterized in that the electronic earmark is provided with the biometric information after the device is added to the animal.

11. A method according to any one of the preceding claims 7-10, characterized in that also an identification code of the animal is stored in the transponder.

12. A method of verifying whether an animal is provided with a correct electronic earmark according to any one of claims 1-6, characterized in that the biometric information is read out at the transponder and is subsequently compared with biometric information which has been and/or is determined directly at the animal.

13. A method according to claim 12, wherein an electronic earmark according to claim 5 is utilized, characterized in that for determining the identity of the animal, the identification code is also read out at the transponder.

14. A system comprising at least one electronic earmark according to any one of claims 1-6, characterized in that the system further comprises a sensor for directly determining biometric information at the animal, a transmitter and receiver unit for reading out the biometric information stored in the transponder using an electromagnetic interrogation field, and a computer for comparing the biometric information obtained by means of the sensor with the biometric information read out at the transponder and-for generating a comparison signal which represents the outcome of said comparison.

15. A system according to claim 14, characterized in that the information stored in the transponder also comprises an identification code of the animal, and the system is also arranged to read out the identification code from the transponder using the transmitter and receiver unit.

16. A system according to claim 15, characterized in that the computer determines whether the identification code belongs to the animal on the basis of the comparison signal.

17. A system according to claim 14, 15 or 16,
characterized in that the transponder is also arranged to store new information in the transponder using the electromagnetic interrogation field, which new information can also be read out from the transponder again using the electromagnetic interrogation field, the system being further arranged to store new information in the transponder using the electromagnetic interrogation field generated by the transmitter and receiver unit.

18. A system according to claim 17, characterized in that the new information comprises biometric information which, using the sensor, has been determined directly at an animal which is to be made identifiable with the aid of the electronic earmark.

19. A system according to claim 18, characterized in that the new information also comprises an identification code of the animal mentioned in claim 18.

20. A system comprising at least one electronic earmark according to claim 4, wherein, in use, the electronic earmark is added to an animal, characterized in that the system further comprises a sensor for directly determining biometric information at the animal, a transmitter and receiver unit for generating an electromagnetic interrogation field and a computer which is connected to the sensor and the transmitter and receiver unit, while, in use, for making the animal identifiable, using the sensor, biometric information is determined directly at the animal and is supplied to the computer, and the computer controls the transmitter and receiver unit such that the biometric information determined directly is stored in the transponder using the interrogation field generated by the transmitter and receiver unit.

21. A system according to claim 20, characterized in that the system is also arranged to store, in addition to biometric information, an identification code of the animal in the transponder.
